# EUROPEAN PATENT APPLICATION

(11) **EP 4 431 458 A1**
(43) Date of publication of application: **18.09.2024**
(21) Application number: 23020127.9
(22) Date of filing: 15.03.2023
(51) Int. Cl.: C01F 11/02, C01F 11/04, C04B 7/42

(54) **METHOD OF PRODUCING CALCIUM OXIDE OR CALCIUM HYDROXIDE FROM A CALCIUM-CONTAINING LIQUID SOLUTION**

(71) Applicant: Holcim Technology Ltd, 6300 Zug (CH)
(72) Inventor: Brouwer, Roald, CH-5113 Holderbank (CH); Seyler, Laurent, CH-5113 Holderbank (CH); Stoffel, Beat, CH-5113 Holderbank (CH); Boes, Karl-Heinz, CH-5113 Holderbank (CH)
(74) Representative: SONN Patentanwälte GmbH & Co KG

(57) **Abstract**

A process of producing calcium oxide or calcium hydroxide from a calcium-containing liquid solution, comprising the following steps:
a) adding oxalic acid or a salt thereof to the calcium-containing liquid solution in order to precipitate calcium oxalate, and collecting the calcium oxalate,
b) contacting the calcium oxalate with an inorganic acid in an aqueous environment in order obtain a calcium salt of the inorganic acid and oxalic acid, and separating the calcium salt from the oxalic acid,
c) processing the calcium salt to produce said calcium oxide or said calcium hydroxide.

## Description

The invention relates to a method of producing calcium oxide or calcium hydroxide from a calcium-containing liquid solution.

Traditionally, Portland clinker is produced by preparing a raw meal of limestone and raw clays and calcining this raw meal in a rotary kiln at a temperature of approximately 1,450°C (2,500°F). During this calcination step, the calcium carbonate in the limestone decarbonates to form carbon dioxide and calcium oxide. In addition, the rotary kiln used to produce Portland clinker is heated by a burner that generates heat by burning carbonaceous materials such as fuels and waste, which also produces carbon dioxide. These two processes occur simultaneously in a Portland clinker production plant and produce large amounts of carbon dioxide.

Given the negative impact of carbon dioxide on climate change, there have been several attempts to use alternative sources of calcium for the production of cement clinker.

An alternative method of producing Portland clinker that does not require the use of calcium carbonate materials is based on the Müller Kühne (MK) process, wherein a source of calcium sulfates is used as the starting material. In the MK-process calcium sulfate, for example in the form of gypsum, is reduced to calcium sulfite which reacts with calcium sulfate to form sulfur dioxide and calcium oxide, the latter being the main material used to make cement. The MK-process takes place at temperatures of around 800°C and requires a carbon source to act as a reducing agent. The calcium oxide produced in the MK-process is further processed to obtain cement clinker.

US 2022/0204403 A1 discloses a method of producing cement and co-producing sulfuric acid from phosphogypsum.

EP 728713 B1 discloses a process in which calcium sulfate materials are mixed with reactive carbon, and calcined at a first temperature of above 700°C so as to obtain calcium oxide, and the calcium oxide is then calcined at a temperature of above 1200°C in the presence of silica, alumina and iron oxide to obtain clinker. The SO₂ containing flue gas is then treated to be converted to SO₃ to produce sulfuric acid.

There is a need to exploit additional sources of calcium that are useful in the production of cement. In particular, there is a need to find sources of calcium that can be processed into calcium oxide or calcium hydroxide without releasing carbon dioxide. Both calcium oxide and calcium hydroxide are useful in the production of building materials such as cement clinker or lime mortar.

The present invention aims at using a calcium-containing liquid solution as a raw material for the production of calcium oxide or calcium hydroxide. Such a raw material can be found in large quantities in the form of seawater desalination brine. The world's annual brine production contains approximately 30 million tons of calcium. Seawater desalination brine is the concentrated salt water that is a by-product of the process of removing salt and other minerals from seawater in order to make it potable. Although there are methods for the industrial or agricultural use of seawater desalination brine, significant amounts thereof are discharged back into the ocean, which has several negative effects, including the development of hyper-saline areas that can be harmful to marine life. Changes in the chemistry of the surrounding water can affect the survival and reproduction of aquatic species. In addition, brine is typically discharged at a higher temperature than the surrounding seawater, which can cause thermal pollution. This can harm marine organisms and disrupt the balance of the local ecosystem.

Therefore, the present invention aims to provide an efficient method of producing calcium oxide or calcium hydroxide from a calcium-containing liquid solution, such as seawater desalination brine.

In order to solve this object, the invention provides a method for producing calcium oxide or calcium hydroxide from a calcium-containing liquid solution, comprising the following steps:
a) adding oxalic acid or a salt thereof to the calcium-containing liquid solution in order to precipitate calcium oxalate, and collecting the calcium oxalate,
b) contacting the calcium oxalate with an inorganic acid in an aqueous environment in order obtain a calcium salt of the inorganic acid and oxalic acid, and separating the calcium salt from the oxalic acid,
c) processing the calcium salt to produce said calcium oxide or said calcium hydroxide.

Step a) aims at concentrating the calcium, since calcium-containing liquid solutions initially have a relatively low calcium concentration. Preferably, seawater desalination brine is used as the calcium-containing liquid solution. Generally speaking, the method according to the invention may be used for processing a calcium-containing liquid solution having, e.g., a calcium concentration of 50-50.000 g/m³, preferably 100-2.000 g/m³, preferably 200-800 g/m³.

Oxalic acid or a salt thereof may be added to the calcium-containing liquid solution in order to precipitate calcium oxalate. A preferred salt of the oxalic acid is sodium oxalate.

The precipitate may be a fine calcium oxalate slurry, which accumulates on the bottom of the tank, in which the calcium-containing liquid solution is kept. In this case, collecting of the calcium oxalate preferably comprises separating the sludge of calcium oxalate from a calcium depleted liquid solution and removing water from the sludge of calcium oxalate in a dewatering step. The calcium oxalate sludge may be removed from the bottom of the tank by, e.g. pumping it into a hydrocyclone, where a portion of the water is removed. The subsequent dewatering step may be carried out, e.g. with vacuum filters or centrifuges. As a result of the dewatering step, a calcium oxalate paste may be obtained. The remaining calcium depleted liquid solution may be used for other processes, such as for the production of salt, or be discharged to the sea. The removed water may preferably be recycled into the calcium-containing liquid solution of step a) .

Step b) aims at obtaining a calcium salt that is suitable as a starting material in the subsequent production of calcium oxide or calcium hydroxide. The calcium salt is obtained from the calcium oxalate by contacting the same with an inorganic acid in an aqueous environment in order to obtain the calcium salt of the inorganic acid and oxalic acid. This step is preferably carried out in a reactor. The calcium salt may be separated from the oxalic acid solution by precipitation to form a slurry, while the oxalic acid remains in solution. The oxalic acid may be separated by means of e.g. a hydrocyclone and a following dewatering system, e.g. by using a vacuum filter.

According to a preferred embodiment of the invention, the oxalic acid obtained in step b) is recycled to step a) and used in step a) to precipitate calcium oxalate from the calcium-containing liquid solution. Sodium hydroxide may preferably be added to the oxalic acid obtained in step b) to obtain sodium oxalate, which is used in step a) as the salt of the oxalic acid.

The calcium salt obtained in step b) is subjected to step c), where it is processed to produce calcium oxide or calcium hydroxide. In this process, the cation of the calcium salt, which is the calcium ion, separates from its anion and is reacted to calcium oxide or calcium hydroxide.

The anion is preferably reacted to obtain a substance that may be recycled into a previous step of the method of the invention. According to a preferred embodiment, the anion is reacted to obtain an inorganic acid that is recycled into step b) and used in step b) for being contacted with the calcium oxalate, thereby obtaining the calcium salt of the inorganic acid and oxalic acid.

Therefore, the invention preferably uses two material recycling loops. The first recycling loop is the oxalic acid cycle between steps a) and b), i.e. the oxalic acid from step b) is recycled to separate the calcium from CO₃ in step a). The second recycling loop is the inorganic acid cycle from the production of calcium oxide or calcium hydroxide in step c) back to step b), where it is used to separate the oxalic acid from the calcium. With these two loops one can extract almost the entire calcium from the calcium-containing liquid solution and there is a minimum need of fresh oxalic acid and mineral acid demand in the process as these materials are fully recycled.

As to the nature of the inorganic acid, a first embodiment of the invention provides that the inorganic acid is sulfuric acid and the calcium salt of the inorganic acid is calcium sulfate. In this embodiment, step c) preferably comprises desulfurizing the calcium sulfate at a temperature of 700-1300°C to obtain calcium oxide and sulfur dioxide and processing the sulfur dioxide to obtain sulfuric acid. One possible embodiment of the desulfurizing process is the Müller-Kühne process, where calcium sulfate is reduced to calcium sulfite which reacts with calcium sulfate to form sulfur dioxide and calcium oxide.

In order to feed the calcium sulfate to step c) in as dry a state as possible, water is preferably removed from the calcium sulfate slurry obtained in step b), resulting in a calcium sulfate paste, and the calcium sulfate paste is dried to obtain a calcium sulfate powder. Drying may be carried out by means of a steam dryer or by direct or indirect heating using hot gases or heat carrier medium.

The water removed in the drying step may be recycled into the calcium-containing liquid solution of step a), preferably by adding the removed water to the oxalic acid that is fed from step b) to step a).

Further, a calcination step may be added to step c) in order to produce cement clinker from calcium oxide. To this end, corrective material, such as silica, alumina and iron oxide containing materials are added to step c) and the calcium oxide is calcined in the presence of the corrective material at a temperature of 1100-1450°C to obtain cement clinker. Clay, sand, concrete demolition waste and other mineral waste materials may be used as said corrective material.

The heat required to carry out the desulfurization step and the calcination step may be produced by burning fuel. In this case, an amount of a carbon-containing material, such as, e.g., biofuel or microalgae may be added to step c). The carbon-containing material may also be required as a reducing agent for the desulfurization step, such as the Müller-Kühne process. In contrast, carbon-containing material is not required if the desulfurization takes place at higher temperatures of >2.000°C e.g. by using an electric plasma burner to provide heat for the desulfurization step.

The production of cement clinker from calcium sulfate can be carried out in one step, where all the materials including the corrective materials are pre-blended before desulfurization, or alternatively in two steps. In the one-step process, the silica, alumina and iron oxide containing materials are added to the calcium sulfate prior to said step of desulfurizing the calcium sulfate. In the two-step process, the materials are heated in two consecutive reactors, each operating at different temperatures (700 to 1.100°C in the first, and 1.100°C to 1.500°C in the second when a reducer is used or above 2.000°C in the second when no reducing agent is used). In the first step, the calcium sulfate is desulfurized. The silica, alumina and iron oxide containing materials can be added prior to the two steps or after the first step.

The sulfur dioxide that is emitted from the desulfurization step is used to produce sulfuric acid, e.g. in a catalyzer process.

The carbon dioxide that is emitted from the desulfurization step and the calcination step in case carbon containing fuels are used in step c) instead of an electric source of heat or carbon free fuel such as hydrogen or a CO₂ neutral fuel, such as biomass, can be separated and may be stored or used for other processes. When a plasma burner is used in the calcination step, a part of the carbon dioxide from the calcination of the fuels, or any another known suitable gas, may be injected into the plasma burner to be used as a carrier gas. Another part of the carbon dioxide may be used to produce biomass, e.g. algae as a carbon input to step c), which then acts as a reducer for the desulfurization step and/or as a fuel for the desulfurization and clinkerization.

According to a second embodiment of the invention, the inorganic acid is hydrochloric acid and the calcium salt of the inorganic acid is calcium chloride. In this embodiment, step c) preferably comprises subjecting an aqueous solution of the calcium chloride to an electrolysis, thereby obtaining calcium hydroxide as well as hydrochloric acid.

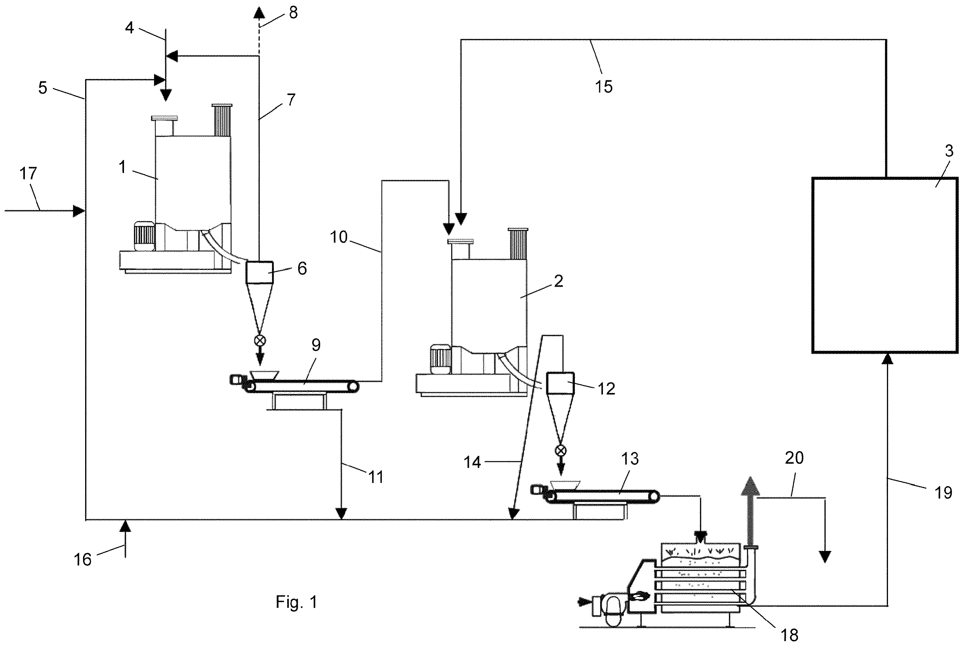

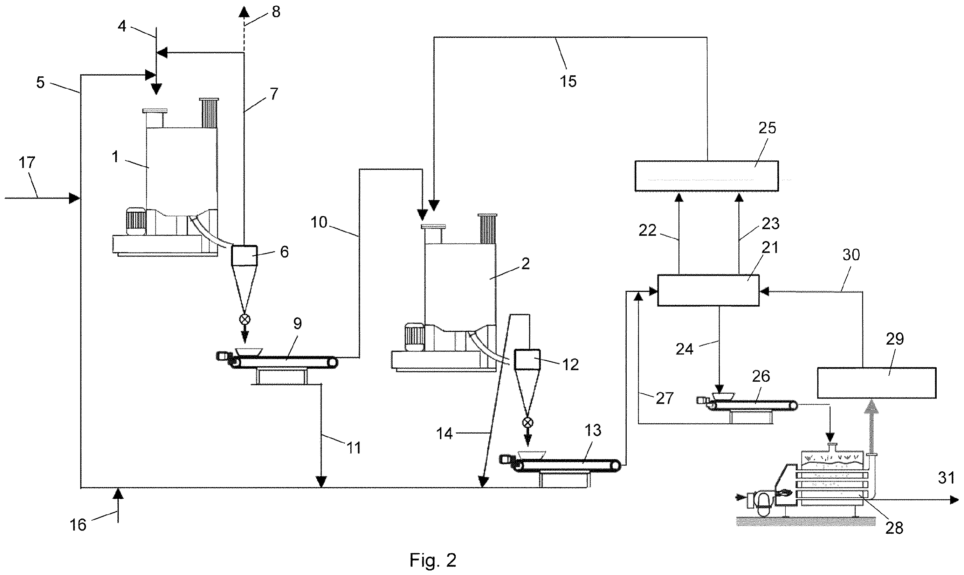

The invention will now be described by reference to an exemplary embodiment illustrated in the drawings. Therein, Fig. 1 shows a plant layout for carrying out a first embodiment of a method according to the invention and Fig. 2 shows a plant layout for carrying out a second embodiment of a method according to the invention.

Fig. 1 shows a diagram of a plant layout comprising a tank 1 for carrying out step a) of the method, a reactor 2 for carrying out step b) of the method, and a calciner 3 for carrying out step c) of the method.

A calcium-containing liquid solution is added to the tank 1 at 4. Further, sodium oxalate is added to the tank 1 via line 5, which causes calcium oxalate to precipitate as a calcium oxalate sludge. The calcium oxalate sludge is collected from the bottom of tank 1 and introduced into a hydrocyclone 6, where a part of the liquid phase, i.e. the calcium depleted liquid solution, is separated and recirculated into the tank 1 via line 7. If desired, a partial amount of the calcium depleted liquid solution may also be used for other processes at 8, such as for the production of salt. Subsequently, the partly dewatered calcium oxalate sludge is subjected to a dewatering step by means of a dewatering system, such as a vacuum belt 9. The calcium oxalate filter cake or paste is transported to the reactor 2 via line 10.

In the reactor 2 the calcium oxalate is contacted with sulfuric acid that is fed into the reactor 2 via line 15. In this process step, calcium sulfate and oxalic acid are generated. Calcium sulfate will precipitate to form a slurry, while the oxalic acid remains in solution. The oxalic acid is separated by means of a hydrocyclone 12 and a following dewatering system, such as a vacuum belt 13 and then recycled to the tank 1 via line 14. The recycling loop from the reactor 2 to the tank 1 may also be used to recirculate the calcium depleted liquid solution that has been separated from the calcium oxalate precipitate of tank 1. In particular, the calcium depleted liquid solution may be added to the recycling loop via line 11.

Additional oxalic acid may be added to the recycling loop at 16, in order to compensate for the loss of the material in the process, e.g. some calcium oxalate would remain in the filter cake of the dewatering system 13. Further, sodium hydroxide is added at 17 in order to obtain sodium oxalate for being used in tank 1.

The calcium sulfate paste obtained from vacuum belt 13 is dried in a drying device 18, such as a steam dryer, and the dry calcium sulfate is processed to produce calcium oxide or clinker and sulfuric acid in the calciner 3. The calcium sulfate is fed to the reactor via line 19, while water obtained from the drying process can be recycled via 20 by using it for process purposes or as drinking water.

In the calciner 3, calcium sulfate is desulfurized at a temperature of 700-1300°C to obtain calcium oxide and sulfur dioxide. This may be carried out by means of the Müller-Kühne process. In the Müller-Kühne process calcium sulfate is reduced to calcium sulfite which reacts with the remaining calcium sulfate to form sulfur dioxide and calcium oxide. Optionally, the calcium oxide may be calcined at a temperature of 1100-1450°C in the presence of silica, alumina and iron oxide containing materials to obtain cement clinker.

The sulfur dioxide emitted from the desulfurization step is processed, e.g. in a catalyzer process (not shown), to obtain sulfuric acid, which is recycled to the reactor 2 via line 15.

The plant layout of Fig. 2 corresponds to the layout of Fig. 1 with regard to the process steps a) and b) carried out in the tank 1 and the reactor 2, wherein the same reference numerals are used as in Fig. 1.

The process carried out with the plant of Fig. 2 differs from the process carried out with the plant of Fig. 1 in that hydrochloric acid is introduced in reactor 2 via line 15 instead of sulfuric acid. Therefore, calcium chloride is precipitated in reactor 2 instead of calcium sulfate. The calcium sulfate, after having been separated from oxalic acid in hydrocyclone 12 and after having been subjected to a dewatering step at 13, is introduced into an electrolyzer 21 In the electrolyzer 21, an aqueous solution of the calcium chloride is subjected to an electrolysis, thereby obtaining a calcium hydroxide slurry 24 as well as hydrogen 22 and chlorine 23. Hydrogen 22 and chlorine 23 are used to produce hydrochloric acid 25, which is recycled via line 15 into the reactor 2. The calcium hydroxide slurry 24 is subjected to a dewatering step by means of a dewatering system, such as a vacuum belt 26. The liquid phase separated from the calcium hydroxide slurry is recirculated to the electrolyzer 12 via line 27. The calcium hydroxide paste obtained from vacuum belt 26 is further dried e.g. in a steam dryer 28 and the dry calcium hydroxide is dispatched at 31. The steam leaving the steam dryer 28 is condensed in a condenser 29, and the resulting water is recirculated to the electrolyzer 12 via line 30.

## Claims

1. A method of producing calcium oxide or calcium hydroxide from a calcium-containing liquid solution, comprising the following steps:
a) adding oxalic acid or a salt thereof to the calcium-containing liquid solution in order to precipitate calcium oxalate, and collecting the calcium oxalate,
b) contacting the calcium oxalate with an inorganic acid in an aqueous environment in order obtain a calcium salt of the inorganic acid and oxalic acid, and separating the calcium salt from the oxalic acid,
c) processing the calcium salt to produce said calcium oxide or said calcium hydroxide.

2. Method according to claim 1, wherein said step of processing the calcium salt comprises producing inorganic acid and wherein said inorganic acid is used as the inorganic acid of step b).

3. Method according to claim 1 or 2, wherein the oxalic acid obtained in step b) is used as the oxalic acid of step a) .

4. Method according to claim 1 or 2, wherein sodium hydroxide is added to the oxalic acid obtained in step b) to obtain sodium oxalate, which is used in step a) as said salt of oxalic acid.

5. Method according to any one of claims 1 to 4, wherein the inorganic acid is sulfuric acid and the calcium salt of the inorganic acid is calcium sulfate.

6. Method according to claim 5, wherein step c) comprises desulfurizing the calcium sulfate at a temperature of 700-1300°C to obtain said calcium oxide and sulfur dioxide and processing the sulfur dioxide to obtain the sulfuric acid.

7. Method according to claim 6, further comprising calcining the calcium oxide in the presence of silica, alumina and iron oxide containing materials to obtain cement clinker.

8. Method according to claim 7, wherein the silica, alumina and iron oxide containing materials are added to the calcium oxide after said step of desulfurizing the calcium sulfate.

9. Method according to claim 7, wherein the silica, alumina and iron oxide containing materials are added to the calcium sulfate prior to said step of desulfurizing the calcium sulfate.

10. Method according to any one of claims 1 to 4, wherein the inorganic acid is hydrochloric acid and the calcium salt of the inorganic acid is calcium chloride.

11. Method according to claim 10, wherein step c) comprises subjecting an aqueous solution of the calcium chloride to an electrolysis, thereby obtaining said calcium hydroxide as well as said hydrochloric acid.

12. Method according to any one of claims 1 to 11, wherein said collecting of the calcium oxalate comprises separating a sludge of calcium oxalate from a calcium depleted liquid solution and removing water from the sludge of calcium oxalate in a dewatering step.

13. Method according to claim 12, wherein the removed water is recycled into the calcium-containing liquid solution, preferably by adding the removed water to the oxalic acid that is fed from step b) to step a).

14. Method according to claim 5, wherein said separating the calcium sulfate from the oxalic acid in step b) comprises separating the calcium sulfate in the form of a slurry, removing water from the slurry to obtain a paste of calcium sulfate and drying the paste of calcium sulfate to obtain a powder of calcium sulfate.

15. Method according to claim 14, wherein the removed water is recycled into the calcium-containing liquid solution, preferably by adding the removed water to the oxalic acid that is fed from step b) to step a).

16. Method according to any one of claims 1 to 15, wherein seawater desalination brine is used as the calcium-containing liquid solution.
